# DEMANDE DE BREVET EUROPEEN

(11) **EP 1 862 341 A1**
(43) Date de publication de la demande: **05.12.2007**
(21) Numéro de dépôt: 07350002.7
(22) Date de dépôt: 08.03.2007
(51) Int. Cl.: B60J 7/12, B60J 7/14

(54) **Procédé de rangement d'un toit mobile à couverture souple**

(30) Priorité: 31.05.2006 FR 0604860
(71) Demandeur: Heuliez, 79140 Cerizay (FR)
(72) Inventeur: Quéveau, Gérard, 79140 Le Pin (FR); Quéveau, Paul, 79140 Montravers (FR); Guillez, Jean Marc, 79140 Cinères (FR)
(74) Mandataire: Tournel, Jean Louis

(57) **Abrégé**

L'invention a pour objet un toit procédé de rangement d'un toit mobile comportant un panneau avant (3) un panneau arrière ( 4) entre lesquels s'étend un mécanisme de déplacement, au moins la zone intermédiaire (8) située entre le bord arrière du panneau avant et le bord avant du panneau arrière étant couverte par une couverture (2) souple en position fermée du toit ce procédé étant caractérisé en ce que lors du rangement du toit par déplacement du panneau avant vers le panneau arrière, on applique à plat la partie (2B) de couverture souple couvrant la zone intermédiaire dans l'espace disponible entre les deux panneaux avant (3) et arrière (4) superposés en le posant sur l'un des panneaux.

## Description

L'invention se rapporte à un procédé de rangement d'un toit mobile à couverture souple.

Elle se rapporte également aux moyens pour la mise en oeuvre du procédé et au véhicule pourvu du toit à couverture souple.

Il existe deux grandes familles de toit mobile rétractable.

Ainsi, on connaît les toits rigides qui se rangent dans le coffre mais occupent un volume important et les toits souples qui sont moins encombrants. Ces toits rigide sont obtenus par fixation d'une peau métallique sur une structure porteuse à la manière d'une carrosserie.

Pour les deuxièmes, le toit souple comporte une structure porteuse transversale fait d'une série d'arceaux indépendant les uns des autres sur lesquels une toile est tendue.

Cette toile doit être fortement tendue pour éviter les battements de celle ci lorsque le véhicule circule à vitesse importante.

Du fait de la tension selon l'axe transversal, ces arceaux de soutien apparaissent sous la couverture et cassent ainsi la ligne courbe et l'esthétique du toit.

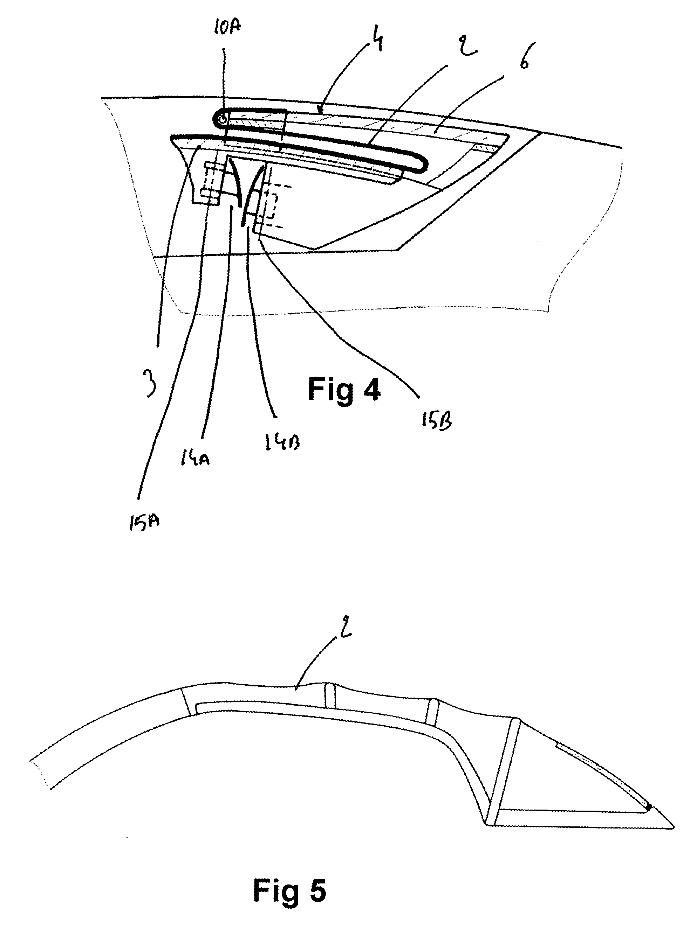

Ce phénomène est encore appelé effet de pagode est illustré à la figure 5.

Un problème de ces toits souples est le rangement de la toile qui est mise en accordéon..

L'invention propose une solution qui remédie notamment à ce problème.

Elle offre de plus une solution économique.

A cet effet, l'invention a pour objet un procédé de rangement d'un toit mobile comportant un panneau avant (3) un panneau arrière ( 4) entre lesquels s'étend un mécanisme de déplacement, au moins la zone intermédiaire (8) située entre le bord arrière du panneau avant et le bord avant du panneau arrière étant couverte par une couverture (2) souple en position fermée du toit ce procédé étant caractérisé en ce que lors du rangement du toit par déplacement du panneau avant vers le panneau arrière, on applique à plat la partie (2B) de couverture souple couvrant la zone intermédiaire, dans l'espace disponible entre les deux panneaux avant (3) et arrière (4) superposés en la posant sur l'un des panneaux.

L'invention a également pour objet le véhicule pourvu du toit.

L'invention sera bien comprise à l'aide de la description ci-après faite à titre d'exemple non limitatif en regard du dessin qui représente schématiquement
FIG 1 : Un toit selon l'invention en vue latérale
FIG 2 : Coupe selon II II de la figure 1
FIG 3: vue en perspective du toit mobile
FIG 4 : Vue du toit mobile en position rangée
FIG 5 : Un toit souple selon l'art antérieur.
FIG 6 une variante du toit mobile avec sa couverture souple.
FIG 6A : le toit de la figure 5 sans couverture à l'état fermé
FIG 6B : le toit de la figure 6A en cours d'ouverture
FIG 7 : le toit de la figure 6 en vue latérale selon coupe VII de la figure 7B
FIG 7A: Coupe selon VIIA de la figure 7
FIG 7B: coupe selon VIIB de la figure 7.
FIG 8a à FIG 8 e : Cinématique de rangement du toit.

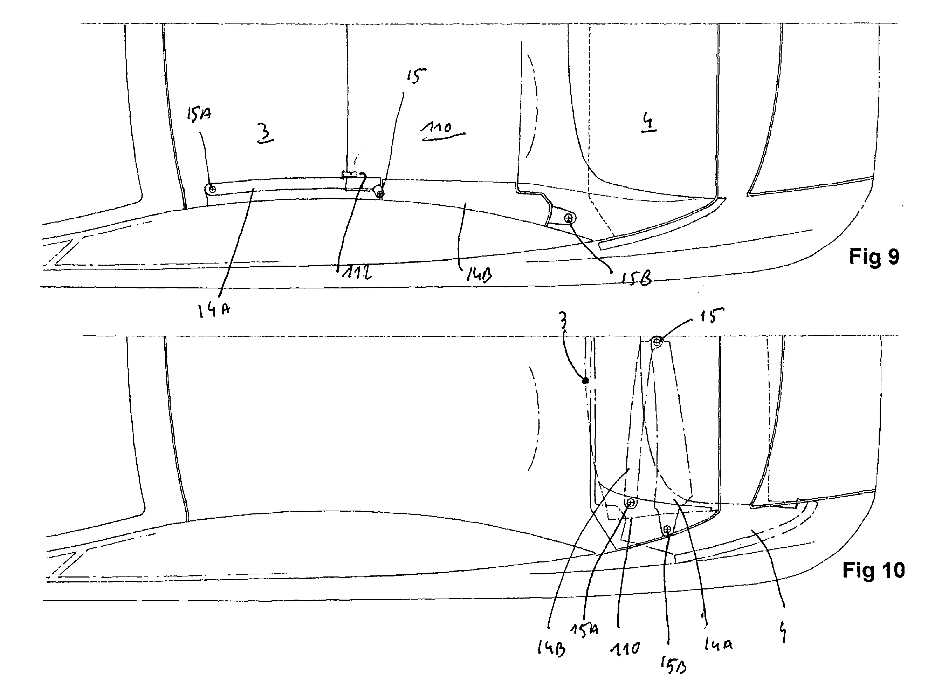

FIG 9 : vue de dessus du toit à l'état fermé
FIG 10 : Vue de dessus du toit à l'état rangé.
FIG 11 : Vue agrandie de la figure 8e

En se reportant au dessin, on voit un toit mobile 1 à couverture souple 2.

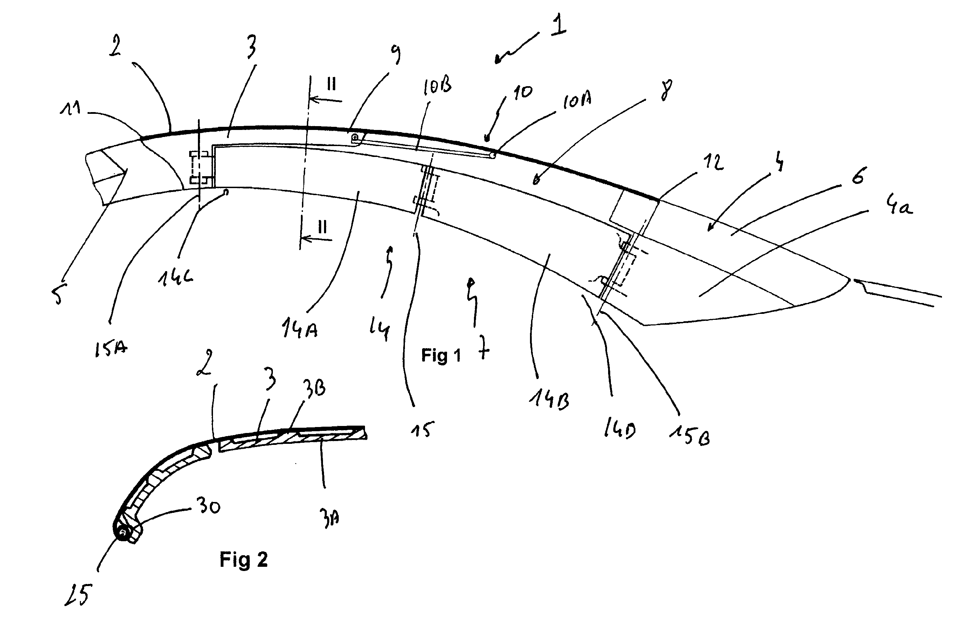

Ce toit mobile comporte une structure 3, 4 porteuse recouverte d'une toile souple 2 pouvant occuper une position couvrant l'habitacle (fig 1) et une position rangée où le toit est rangé à l'arrière du véhicule ( fig 4) .

Lorsque le toit couvre l'habitacle, la couverture souple s'étend habituellement depuis la traverse 5 du pare-brise jusqu'à la base 6A de la lunette arrière 6 mais on verra plus loin qu'une variante est possible.

Une structure porteuse avant 3 se situe à l'avant du toit et occupe environ un tiers de la longueur du toit. On l'appellera aussi panneau avant

Une structure porteuse arrière 4 se situe à l'arrière et occupe également environ un tiers de la longueur totale du toit, on l'appellera aussi panneau arrière.

La partie de la structure porteuse constituée par des structures porteuses avant et arrière 3,4 possède une forme rigide s'étendant à la fois transversalement et longitudinalement formant ainsi une surface d'étendue substantielle que pourra épouser la couverture souple.

L'étendue de chacune des structures porteuses avant ou arrière est donc de l'ordre de un tiers de la surface totale du toit mobile dans son état fermé.

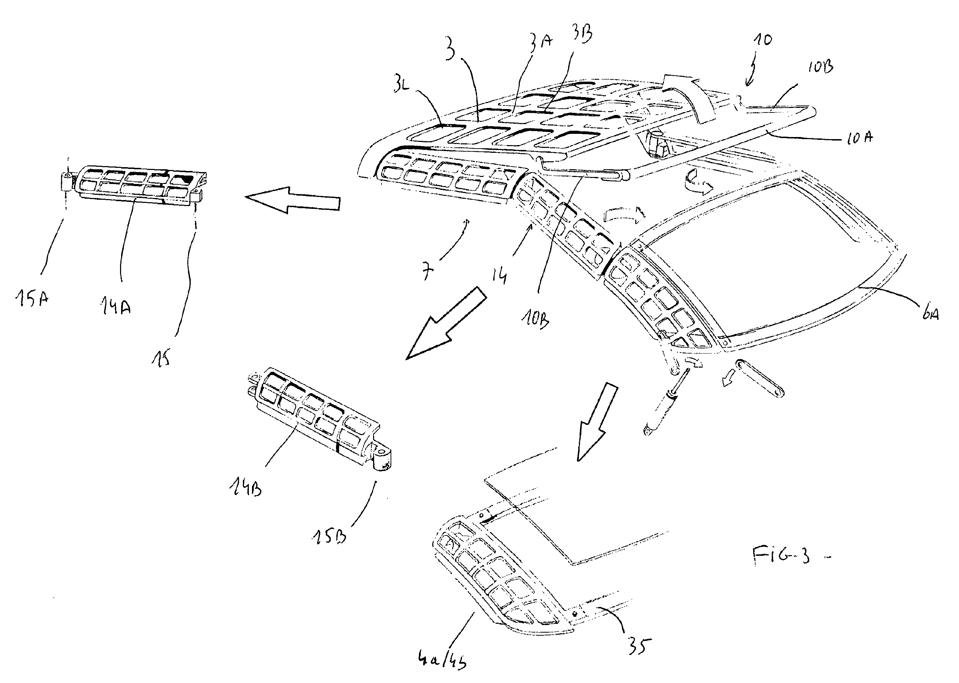

La surface supérieure de cette structure 3,4 porteuse pourra être continue ou ajourée (figure 3).

Dans la variante ajourée, l'étendue de la surface d'appui que procure la structure porteuse ajourée recouverte par la toile sera d'au moins 50% de la surface totale de la toile la recouvrant ( hormis les vitres que pourront représenter les panneaux avant et arrière) et de préférence supérieure à 70%.

Ainsi la couverture souple tendue sur cette structure porteuse 3,4 va épouser la forme extérieure de la dite structure 3,4 et conservera cette forme et les courbes.

Elle pourra aussi posséder, au moins partiellement, un relief à motifs tels que des nervures qui pourront apparaître sous la toile.

Lorsqu'elle est ajourée, elle comprend donc des éléments transversaux 3A reliés par des éléments longitudinaux 3B offrant chacun une large assise pour la face inférieure de la toile évitant ainsi des effets de creux. Bien évidemment une structure en croisillon ne sortirait pas du cadre de l'invention.

Ainsi, sur ces panneaux ajourés, malgré la présence de trous, la couverture souple épouse la courbe globale du panneau ce qui limite l'effet « pagode ». On comprend bien que le rapport entre la surface des trous et la surface totale du panneau ne doit pas descendre sous un minimum qui dépend de la forme et de la section de ces trous 3C ainsi que de la nature de la toile.

Cette structure porteuse 3,4 sera obtenue par moulage notamment par injection.

De préférence, on utilisera un alliage léger tel un alliage avec une forte proportion de magnésium (environ 95% ) et un peu d'aluminium de sorte à être léger et rigide. On peut également envisager des alliages à forte teneur en aluminium de l'ordre de 95%

On peut également procéder à une moulage par injection de matériaux composites composés de fibres et de matériaux thermodurcissables.

On peut également faire appel à des techniques mettant en oeuvres des nappes fibreuses noyées dans une résine.

Dans la forme de réalisation représentée, le toit mobile comprend un panneau avant de forme 3, un panneau arrière de forme 4 sur lequel est montée la lunette 6 arrière et entre les deux un mécanisme 7 de déplacement relatif entre le panneau avant et arrière afin de plier le toit et le ranger, la couverture souple 2 couvrant les deux panneaux 3, 4 et une zone intermédiaire 8.

La couverture souple, dans l'exemple représenté, couvre donc les deux panneaux arrière et avant. Elle s'appuie sur le panneau avant et arrière et dans l'espace dit zone intermédiaire 8 situé entre le bord arrière du panneau avant et le bord avant du panneau arrière, la couverture souple est simplement tendue.

Pour le maintien de la couverture dans cette zone intermédiaire, il est prévu (figure 1 et 3) sur l'un des bords, ici le bord arrière 9 du panneau avant 3 uniquement une barre 10 de tension sollicitée vers le haut par des moyens élastiques.

La barre de tension comprend un élément transverse 10 A et deux bras 10B la reliant à la partie avant de toit lui conférant une forme de U. Donc dans cette zone intermédiaire, la couverture souple sera tendue par la barre de tension.

On verra plus loin l'intérêt que peut avoir cette barre de tension.

Un autre intérêt, résulte en ce que le panneau arrière peut comporter une lunette arrière rigide.

En vue de dessus, il se présente sous la forme d'un cadre dont la partie centrale est occupée par la lunette arrière.

Le panneau avant peut également être configuré comme un cadre portant une vitre.

Dans une variante non représentée, le toit mobile comprend un panneau avant 3 de forme, un panneau arrière 4 de forme sur lequel est montée la lunette 6 arrière et entre les deux un mécanisme 7 de déplacement relatif entre le panneau avant et arrière afin de plier le toit et le ranger, la couverture souple couvrant un seul des deux panneaux avant ou arrière et une zone intermédiaire. Ainsi la couverture souple est fixée sur le bord avant 11 du panneau avant 3 de forme et sur le bord avant 12 du panneau arrière 4 ou suivant une autre variante la couverture souple est fixée sur la bord arrière 9 du panneau avant 3 et sur le bord arrière 13 du panneau arrière 4.

Dans une autre variante minimaliste, la couverture souple s'étend uniquement entre les deux panneaux 3,4.

Le panneau arrière comporte une paroi supérieure et deux éléments latéraux 4a, 4b ;

Ces éléments latéraux 4a, 4b, sont par exemple reliées par des traverses 35 qui forment, avec la lunette la paroi supérieure. La lunette est ainsi fixée sur les traverses et les éléments latéraux.

Le mécanisme de déplacement permet, lors de l'ouverture du toit, de déplacer le panneau avant vers le panneau arrière et inversement.

Les panneaux viennent se superposer et entre ces deux panneaux, selon l'invention -il est prévu d'insérer la partie de couverture souple qui couvre la zone intermédiaire.

Le mécanisme 7 de déplacement comprend deux bras 14 latéraux chacun de ces bras étant composé de deux segments 14A, 14B articulés d'une part, l'un sur l'autre selon un axe sensiblement vertical 15 et d'autre part, en leurs autres extrémités 14 C, 14 D sur le panneau avant et le panneau arrière selon des axes 15A, 15Bsensiblement verticaux

En position de couverture du véhicule, les segments 14A, 14B de chaque bras 14 sont sensiblement alignés et ils se plient vers l'intérieur pour découvrir le véhicule.

Les axes d'articulation 15A, 15B du bras longitudinal se trouvent au voisinage du bord avant du panneau arrière et entre les bords avant et arrière du panneau avant.

Tout comme les panneaux avant et arrière, ces bras seront des éléments de forme dont la face externe prolonge la ligne esthétique des panneaux de forme et de la carrosserie ( voir figures 2, 3, 6A , 6B, 7A, 7B).

Ils pourront également être obtenus tout ou partie par moulage

Des moyens sont prévus pour amener l'un des panneaux sous l'autre, c'est à dire à des niveaux différents.

On peut obtenir cela en inclinant les axes des bras par rapport à la verticale. Lorsque les bras se plient, ils décalent le panneau avant vers le haut ou respectivement vers le bas de façon à placer cet élément au dessus ou respectivement en dessous de l'élément arrière.

On peut également utiliser des articulations afin de décaler l'un des panneaux par rapport à l'autre.

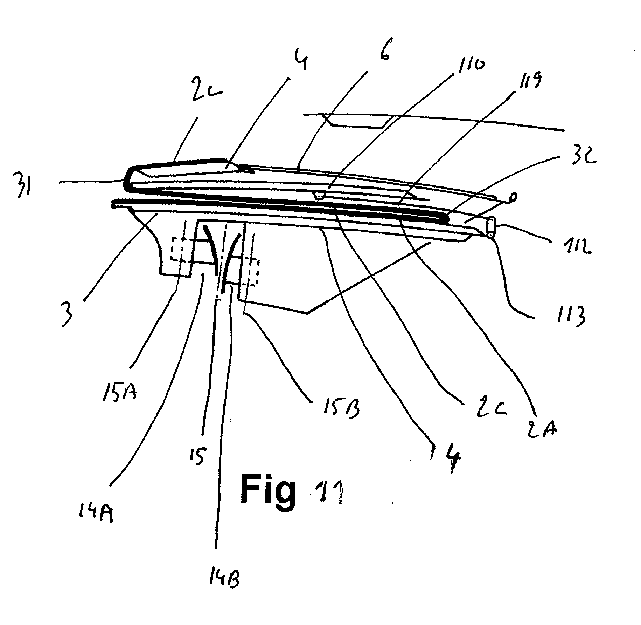

Comme il a été dit précédemment, la barre 10 de tension permet de guider la couverture souple dans l'espace créé entre les deux panneaux lorsqu'ils se superposent. Cela évite que la toile souple se plie en accordéon ou se positionne sous le panneau arrière. L'élément transverse 10A pousse sur la couverture souple pour former un pli 31. En position rangée, la couverture souple présente un pli 31 à l'avant et un pli 32 à l'arrière et entre les deux plis 31, 32 la toile est à plat ( figure 4 et 11).

Pour obtenir cet effet, la couverture souple doit être retenue sur le bord avant du panneau arrière et retenue également sur le bord arrière du panneau avant.

La couverture souple est équipée sur les deux bords longitudinaux d'un câble 25 formant un bourrelet lequel câble se tend lorsque le toit est placé en position couverte.

Une gorge 30 latérale formée dans les bras latéraux et les parties latérales du toit arrière reçoit le bourrelet précité lors de la mise en tension qui résulte simplement du déploiement des bras longitudinaux.

Afin de réduire l'encombrement du toit rangé, on pourra envisager une toile sensiblement plane, c'est à dire sans retombées sur les bords longitudinaux, cette toile étant retenue par des câbles 25 longitudinaux.

Une telle toile présente l'avantage de pouvoir être pliée facilement et dans un très faible espace entre les panneaux de forme 3,4.

On voit en figure 4, le toit rangé avec en dessous l'élément de forme avant 3 qui se place donc notamment sous la lunette 6. Les segments ( 14A, 14B) de bras se trouvent alors transversalement à l'axe longitudinal du véhicule.

On obtient un encombrement réduit pour un meilleur espace de rangement.

Afin d'optimiser le rapport poids rigidité, les éléments de formes (3, 4,14A, 14B,4a, 4b) pourront être réalisés sous une forme ajourée comme cela apparaît à la figure 3.

De nombreux avantages de ce système apparaissent.

Ainsi, On améliore l'aérodynamisme et également la possibilité de rouler à des vitesses plus élevés car le toit est plus résistant.

La lunette arrière pourra avoir une courbure plus prononcée et avoir une étendue plus grande.

On réduit également le débattement vers le haut lors du retrait.

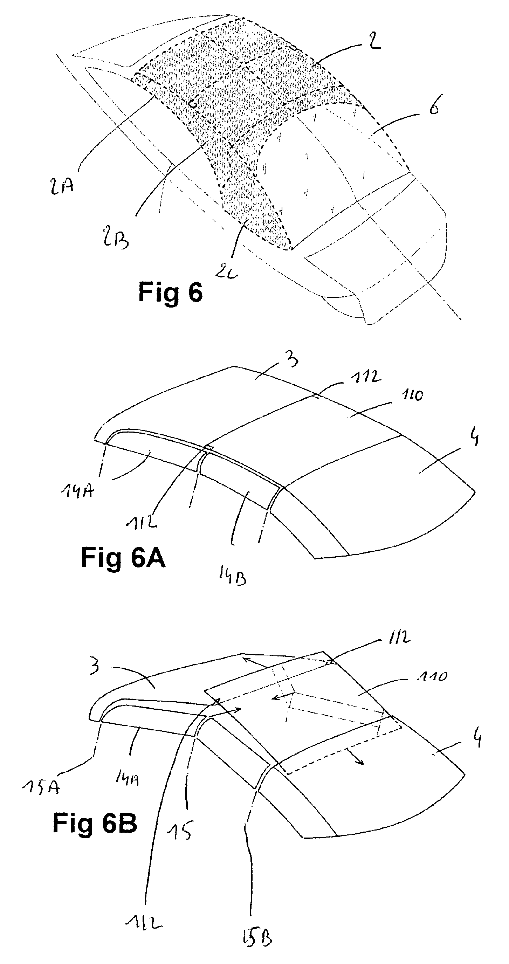

Une variante à la barre 10 de tension guidant la toile entre le panneau avant 3 et le panneau arrière 4 est maintenant décrite ci après et apparaît aux figures 6 et suivantes.

La barre 10 mobile par rapport au panneau 3 avant est ici remplacée par un élément transverse 110 dont la surface de contact avec la toile est beaucoup plus étendue que la simple barre transversale 10A .

Ici l'élément transverse est une plaque 110 coulissante. Cette plaque est en matériau rigide comme un matériau composite comprenant des fibres tel que des fibres de carbone.

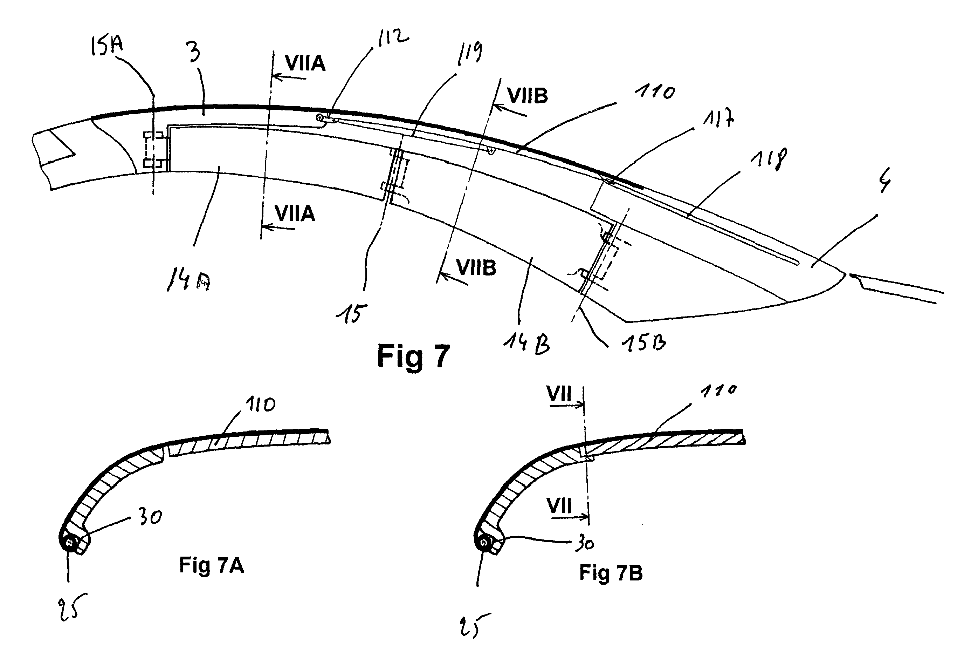

Cette plaque coulissante est représentée comme occupant l'espace entre le bord arrière de l'élément avant 3 et le bord avant de l'élément arrière 4 mais il n'est pas nécessaire qu'elle soit aussi étendue. Le bord arrière de cette plaque pourrait être à distance du bord avant du panneau arrière. La plaque 110 s'étend également entre les bras latéraux 14 sur lesquels elle peut s'appuyer ( figure 7B)

Tout comme la barre de tension 10, cette plaque 110 va aider à ranger la couverture souple dans l'espace disponible entre le panneau 3 avant et le panneau 4 arrière en poussant sur la couverture souple.

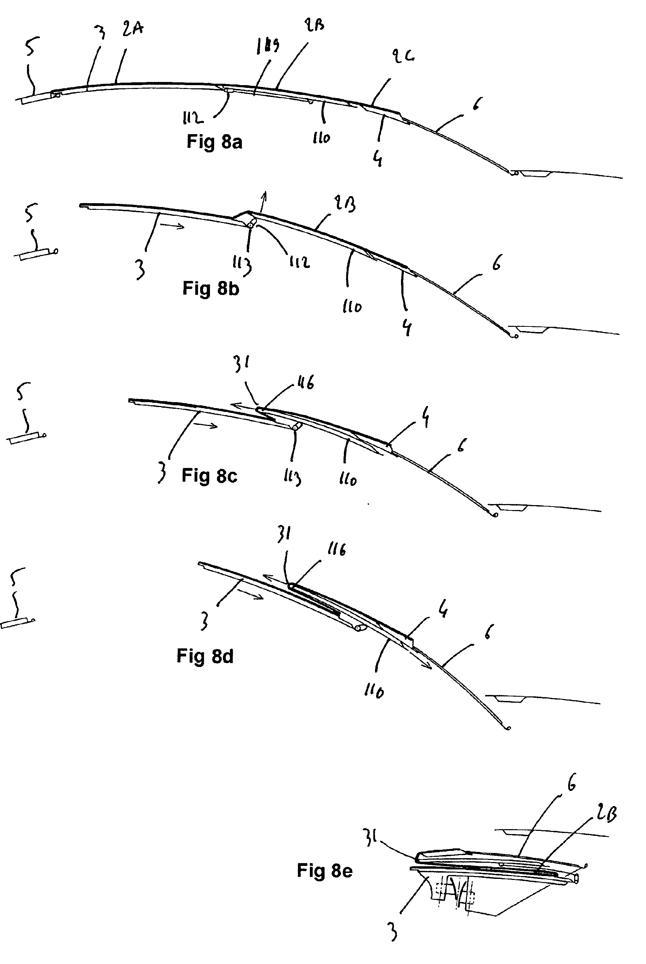

Le déplacement de cette pièce mobile va cette fois ci se faire par translation. Les figures 8a à 8 e montrent le rangement de la couverture 2 souple.

La figure 8a montre le toit couvrant l'habitacle donc à l'état fermé. On voit que la plaque 110 s'étend sous toute la zone de couverture souple située entre les deux panneaux 3,4 et les bras latéraux 14 pour constituer également un moyen anti-effraction.

La seconde étape (figure 8b) montre des moyens 112 de soulèvement du bord avant de la plaque 110 au moment où le panneau 3 avant commence à reculer.

Les figures 8c et 8d montre la progression du panneau avant sous la plaque qui glisse également sous le panneau arrière dans un mouvement freiné. Le bord avant de cette plaque pousse alors la couverture souple pour former un pli 31 avant. Cette pièce 110 mobile contrôle donc le pliage de la couverture souple en contrôlant le déplacement du pli avant. Plus précisément, la poussée de la plaque permet de faire rouler le pli vers l'avant sur le panneau avant 3 et ainsi appliquer progressivement la couverture souple face contre face sur le panneau avant 3. Cette portion de couverture souple est donc mise à plat.

La figure 8 e montre le toit rangé.

Depuis le dessous, on voit le panneau 3 avant recouvert de la partie 2A de couverture qui le recouvre en position fermée du toit. Depuis le bord arrière de ce panneau avant on voit le brin libre 2B de couverture qui revient vers l'avant pour contourner le bord avant de la plaque 110. Par dessus vient le panneau arrière 4 recouvert de la dernière partie 2C de la couverture souple. La plaque 110 se trouve donc prise en sandwich entre le brin libre 2B et le panneau arrière 4.Si le panneau 4 n'était pas couvert par une partie arrière 2c de toile, le brin libre 2B de la couverture serait directement en contact avec le panneau arrière 4.

On notera que la partie de couverture souple est posée à plat sur l'un des panneaux.

La disposition serait inverse si le panneau avant 3 venait se positionner au dessus du panneau arrière 4.Dans ce cas la plaque pousserait le pli sur le panneau arrière en le faisant rouler vers l'arrière pour appliquer la couverture 2B souple sur le panneau arrière 4.

Les moyens 112 de soulèvement de la plaque sont des languettes montées pivotantes sur un axe 113 transverse du panneau avant. Le soulèvement de ces moyens est réalisés par un ressort ( non représenté) ou un actionneur (non représenté).

Comme cela a été dit, le déplacement de la plaque par rapport au panneau arrière doit avoir une vitesse plus faible que le déplacement du panneau avant par rapport à la dite plaque. Il y a donc un moyen 114 de contrôle du déplacement de la plaque 110 par rapport à chacun des panneaux 3,4, la vitesse de déplacement de la plaque par rapport à chaque panneau étant différente. Dans l'exemple représenté, le panneau avant se déplace plus vite par rapport à la plaque que la plaque par rapport au panneau arrière 4 pour que la plaque exerce une poussée par son bord 116 avant sur le pli 31 de la couverture souple.

Pour avoir ce différentiel de vitesse , on peut utiliser les patins 117 de guidage de la plaque dans des glissières 118 qui freinent le dit déplacement ou alors des vérins équilibreurs ou un système mécanique à câbles ou courroies le principe étant de prévoir des moyens de déplacement à des vitesses relatives différentes. Il faut prévoir que le bord soulevé de la plaque pousse sur la couverture souple. Les glissières sont portées par le panneau arrière 4.

Pour la remise en place du toit en position fermée couvrant l'habitacle, le déplacement du panneau avant va tirer sur la couverture souple et va donc dérouler la dite couverture souple. Il va cependant falloir aider au déplacement de la plaque. Pour cela celle ci sera reliée au panneau avant 3 par exemple par un moyen de traction 119 tel un lien souple 119 comme des câbles mais on peut imaginer d'autres moyens mécaniques d'entraînement. Lors du retour vers sa position initiale, le lien se tend et vient replacer la plaque en sa position initiale.

La plaque 110 s'appuie, lorsque le toit est en position fermée, sur le panneau avant (3) et/ou arrière (4) et/ou sur les bras (14)

## Revendications

1. Procédé de rangement d'un toit mobile comportant un panneau avant (3) un panneau arrière ( 4) entre lesquels s'étend un mécanisme de déplacement, au moins la zone intermédiaire (8) située entre le bord arrière du panneau avant et le bord avant du panneau arrière étant couverte par une couverture (2) souple en position fermée du toit ce procédé étant **caractérisé en ce que** lors du rangement du toit par déplacement du panneau avant vers le panneau arrière, on applique à plat la partie (2B) de couverture souple couvrant la zone intermédiaire, dans l'espace disponible entre les deux panneaux avant (3) et arrière (4) superposés en la posant sur l'un des panneaux.

2. Procédé de rangement d'un toit mobile selon la revendication 1 **caractérisé en ce qu'**on déplace le panneau avant (3) sous le panneau arrière (4).

3. Procédé de rangement d'un toit mobile selon la revendication 1 **caractérisé en ce qu'**on déplace le panneau avant sur le panneau arrière.

4. Procédé de rangement d'un toit mobile selon l'une quelconque des revendications précédentes **caractérisé en ce que**, à l'état rangé de la couverture souple (2B), pour que la dite couverture souple (2B) soit appliquée à plat sur l'un des panneaux avant (3) ou arrière (4), on pousse, avec un élément transverse (10A 110) sur la couverture souple en vue de former un pli (31) roulant progressivement.

5. Moyens de mise en oeuvre du procédé selon l'une quelconques des revendications 1 à 4 **caractérisé en ce qu'**il comprend un élément transverse (10A, 110) poussant la toile lors du déplacement des panneaux.

6. Moyens selon la revendication 5 **caractérisé en ce que** l'élément transverse (110) est une plaque guidée en translation.

7. Moyens selon la revendication 5 **caractérisé en ce que** l'élément transverse (10A) est portée par deux bras (10B) , l'ensemble étant pivotant sur un axe transverse.

8. Moyens selon la revendication 6 **caractérisé en ce qu'**ils comprennent des moyens (112) de soulèvement de l'un des bords avant ou arrière de la dite plaque.

9. Moyens selon la revendication 6 ou 8 **caractérisés en ce qu'**il comprennent un moyen de contrôle du déplacement de la plaque par rapport à chacun des panneaux, la vitesse de déplacement de la plaque par rapport à chaque panneau étant différente.

10. Moyens selon la revendication 9 **caractérisé en ce que** le moyen de contrôle du déplacement consiste en des patins (117) freinés dans au moins une glissière (118).

11. Moyens selon l'une des revendications 6 ou 8 à 10 **caractérisé en ce qu'**ils comprennent un élément (119) de traction tirant sur la plaque lorsque le panneau avant se déplace vers l'avant lors de la fermeture du toit.

12. Toit mobile comportant un panneau avant (3), un panneau arrière (4) entre lesquels s'étend un mécanisme (7) de déplacement, la zone intermédiaire située entre le bord arrière du panneau avant et le bord avant du panneau arrière étant couverte par une couverture souple, en position fermée du toit, ce toit mobile étant **caractérisé en ce que** la zone intermédiaire (8) est fermée au moins partiellement par une plaque supportant la dite couverture lorsque le toit est en position fermé.

13. Toit mobile selon la revendication 12 **caractérisé en ce que** le mécanisme de déplacement est constitué de bras latéraux articulés aux panneaux avant et arrière et **en ce que** la plaque (110) supportant la toile s'étend entre les bras (14).

14. Toit mobile selon la revendication 12 ou 13 **caractérisé en ce que** la plaque s'appuie, lorsque le toit est en position fermée, sur le panneau avant (3) et/ou arrière (4) et/ou sur les bras (14).

15. Toit selon la revendication 13 ou 14 **caractérisé en ce que** le panneau avant, le panneau arrière, les bras latéraux et la plaque constitue une structure porteuse sur laquelle s'applique la couverture souple.

16. Toit mobile selon l'une quelconque des revendications 12 à 15 **caractérisé en ce que** le panneau avant et/ou le panneau arrière et/ou les bras sont une ou des forme(s) rigide(s) ajourée(s).

17. Véhicule équipé d'un toit mobile comportant un panneau avant (3) un panneau arrière ( 4) entre lesquels s'étend un mécanisme (7) de déplacement, la zone située entre le bord arrière du panneau avant et le bord avant du panneau arrière étant couverte par une couverture souple en position fermée du toit ce véhicule étant **caractérisé en ce qu'**il est pourvu des moyens selon l'une quelconque des revendications 5 à 11 ou d'un toit mobile selon l'une quelconque des revendications 12 à 16.
